(19) **Europäisches Patentamt**

**European Patent Office**

**Office européen des brevets**

(11) **EP 0 613 037 B1**

(12) **EUROPEAN PATENT SPECIFICATION**

(45) Date of publication and mention
of the grant of the patent:
**16.05.2001 Bulletin 2001/20**

(51) Int Cl.⁷: **G02F 1/1337**

(21) Application number: **94300657.7**

(22) Date of filing: **28.01.1994**

(54) **A liquid crystal display apparatus,a method for producing the same,and a substrate**

Flüssigkristall Anzeigevorrichtung, Verfahren zu ihrer Herstellung, und ein Substrat

Appareil à cristal liquide, méthode pour sa production et substrat

(84) Designated Contracting States:
**DE FR GB NL**

(30) Priority: **29.01.1993 JP 1417793**
**04.06.1993 JP 13498393**
**22.07.1993 JP 18173893**
**30.07.1993 JP 19049993**
**27.08.1993 JP 21322993**

(43) Date of publication of application:
**31.08.1994 Bulletin 1994/35**

(60) Divisional application:
**99203650.9 / 0 977 078**

(73) Proprietor: **SHARP KABUSHIKI KAISHA**
**Osaka-shi, Osaka-fu 545-0013 (JP)**

(72) Inventors:
• **Mizushima, Shigeaki**
**Ikoma-shi, Nara-ken (JP)**
• **Aburazaki, Kazuyuki**
**Tenri-shi, Nara-ken (JP)**
• **Watanabe, Noriko**
**Nara-shi, Nara-ken (JP)**
• **Hirata, Mitsuaki**
**Tenri-shi, Nara-ken (JP)**
• **Iwagoe, Hiroko**
**Yamatokoriyama-shi, Nara-ken (JP)**
• **Okamura, Tomoko,**
**211 Raport Higashi-funabashi**
**Funabashi-shi, Chiba-ken (JP)**

(74) Representative: **Suckling, Andrew Michael et al**
**Marks & Clerk,**
**Nash Court,**
**Oxford Business Park South**
**Oxford OX4 2RU (GB)**

(56) References cited:
**EP-A- 0 421 190        EP-A- 0 549 283**
**US-A- 5 280 375**

• **PATENT ABSTRACTS OF JAPAN vol. 011, no. 097 (P-560) 26 March 1987 & JP-A-61 249 021 (CITIZEN WATCH CO LTD) 6 November 1986**
• **PATENT ABSTRACTS OF JAPAN vol. 013, no. 361 (P-917) 11 August 1989 & JP-A-01 120 531 (ALPS ELECTRIC CO LTD) 12 May 1989**
• **PATENT ABSTRACTS OF JAPAN vol. 013, no. 361 (P-917) 11 August 1989 & JP-A-01 120 533 (ALPS ELECTRIC CO LTD) 12 May 1989**
• **PATENT ABSTRACTS OF JAPAN vol. 017, no. 265 (P-1542) 24 May 1993 & JP-A-05 005 886 (MATSUSHITA ELECTRIC IND CO LTD) 14 January 1993**
• **PATENT ABSTRACTS OF JAPAN vol. 014, no. 230 (P-1048) 16 May 1990 & JP-A-02 055 330 (MATSUSHITA ELECTRIC IND CO LTD) 23 February 1990**
• **SID 1992 INTERNATIONAL SYMPOSIUM - DIGEST OF TECHNICAL PAPERS, MAY 1992, PLAYA DE REY, CA, USA pages 798 - 802, XP000392684 Y. KOIKE ET AL. 'A Full-Color TFT-LCD with a Domain-Divided Twisted-Nematic Structure'**
• **PATENT ABSTRACTS OF JAPAN vol. 017, no. 631 (P-1648) 22 November 1993 & JP-A-05 203 951 (NEC CORP) 13 August 1993**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

## Description

## BACKGROUND OF THE INVENTION

1. Field of the Invention:

The present invention relates to a method of producing a liquid crystal display apparatus with a wide viewing angle and a method for producing the same, and also relates to a substrate.

2. Description of the Related Art:

In a liquid crystal display (LCD), a liquid crystal layer including liquid crystal molecules is provided between a pair of substrates. When the alignment of the liquid crystal molecules is changed, the optical refractive index of the liquid crystal layer is also changed. By utilizing the change in the refractive index, the LCD performs the display. Accordingly, it is important that the liquid crystal molecules are arranged as regularly as possible in the initial state. In order to regularly arrange the liquid crystal molecules in the initial state, the surface conditions of the substrates which sandwich the liquid crystal layer should regulate the interactions between the liquid crystal molecules and the surfaces.

In the method for performing such a regulation which is currently the most widely used, material for a liquid crystal aligning film is applied to each of the surfaces of the substrates which face the liquid crystal layer. The applied material is dried and cured, so as to form the aligning film. Thereafter, the surface of the aligning film is rubbed.

There are two types of aligning films for regulating the alignment of the liquid crystal, i.e., an inorganic aligning film and an organic aligning film. Materials for the inorganic aligning film include oxides, inorganic silane, metals, and metal complexes, whereas materials for the organic aligning film include polyimides. A typical material for the liquid crystal aligning film which is currently employed is a polyimide resin. The polyimide resin is produced in the following manner. A polyamic acid, which is a precursor for all aromatic polyimides (all aromatic PI), is first applied to a substrate. Then, the substrate with the polyamic acid is heated so that an imidization reaction is caused to occur. As a result, the polyamic acid is converted into a polyimide resin. The reasons why the polyimide resin is widely used for the liquid crystal aligning film material are the concentration and the viscosity thereof can easily be adjusted since the polyamic acid has a good solubility, the polyimide resin has a good applicability, and that the thickness of the polyimide resin film can be easily controlled. The produced polyimide resin is more stable in terms of energy than the polyamic acid. Accordingly, when the substrate with the polyimide resin is cleaned by water, the reversible reaction will not occur.

The polyimide film which is formed on the substrate in the above-described manner is unidirectionally rubbed with a burnishing cloth or the like. Thus, the liquid crystal molecules can be aligned in the rubbing direction. The rubbing treatment is unidirectionally performed on the substrate, so that the tilt angles (i.e., pretilt angles) of the liquid crystal molecules in the liquid crystal layer which are in contact with the aligning film are all equal to each other. Accordingly, in each picture element constituting a dot as a unit of a matrix-type display pattern, all the pretilt angles are substantially equal to each other and are aligned in one direction.

In an active matrix type LCD which uses thin film transistors as switching elements connected to respective pixel electrodes constituting picture elements of the display pattern, that is, in a TFT-LCD, a construction of a twisted nematic (TN) type liquid crystal layer is adopted (an LCD of the TN mode). In such an LCD of the TN mode, the liquid crystal molecules between the pair of substrates are continuously twisted by 90° along the direction perpendicular to the surfaces of the substrates. The viewing angle characteristics of the LCD define the optimal viewing angle direction and the viewing angle range depending on the directions of the liquid crystal molecules in the liquid crystal layer (the aligning directions and the tilt angles).

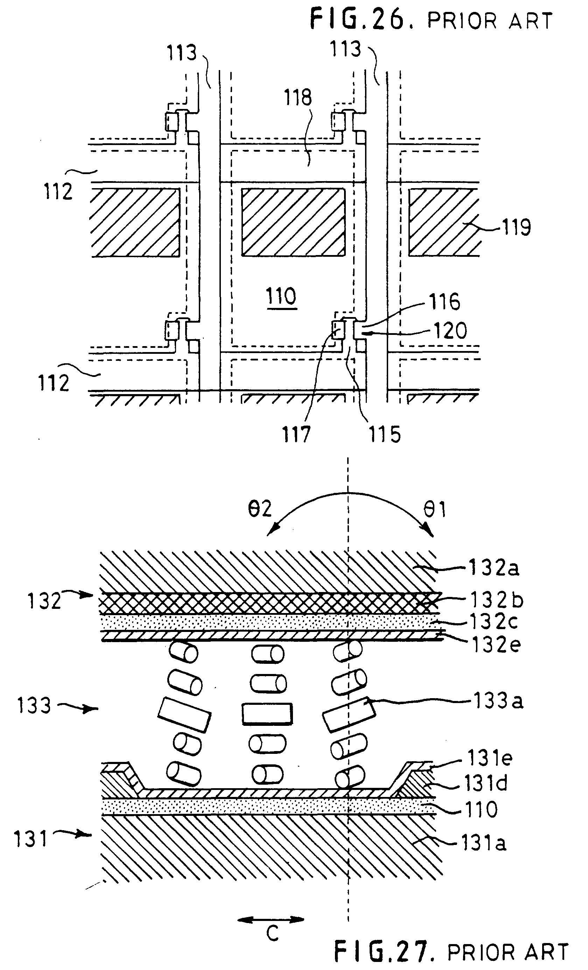

Figure **27** shows a cross section of a picture element portion of an exemplary TN type LCD. The LCD is a TFT-LCD of an active matrix type. As is shown in Figure **27**, a liquid crystal layer **133** is sandwiched between substrates **131** and **132** which are provided so as to face each other. Figure **26** is a plan view of the substrate **131** in Figure **27**. In the substrate **131**, scanning lines **112** and signal lines **113** are formed so as to cross each other on a glass substrate **131a**. In the vicinity of the crossings of the scanning lines **112** and the signal lines **113**, thin film transistors (TFTs) **120** as nonlinear elements having switching function are formed. In areas defined by the scanning lines **112** and the signal lines **113**, pixel electrodes **110** are formed, respectively. Each of the TFTs **120** includes a gate electrode **115** which is branched from a scanning line **112**, a source electrode **116** which is branched from a signal line **113**, and a drain electrode **117** for connecting the TFT **120** to a pixel electrode **110**. The reference numeral **118** denotes an additional capacitance.

Over the above elements, as is shown in Figure **27**, an insulating protective film **131d** and an aligning film **131e** are formed in this order. In the other substrate **132**, a color filter **132b**, a transparent electrode **132c**, an insulating protective film (not shown), and an aligning film **132e** are formed on a glass substrate **132a** in this order.

A liquid crystal molecule **133a** in the liquid crystal layer **133** which is sandwiched by the above-mentioned substrates **131** and **132** is tilted as shown in Figure **27**, and the inclination represents the aligning direction of the liquid crystal. The substrates **131** and **132** are sealed at their ends by a resin or the like (not shown), and a peripheral circuit or the like for driving the liquid crystal is externally mounted. LCDs which are of types other than the active matrix type have the same construction as described above.

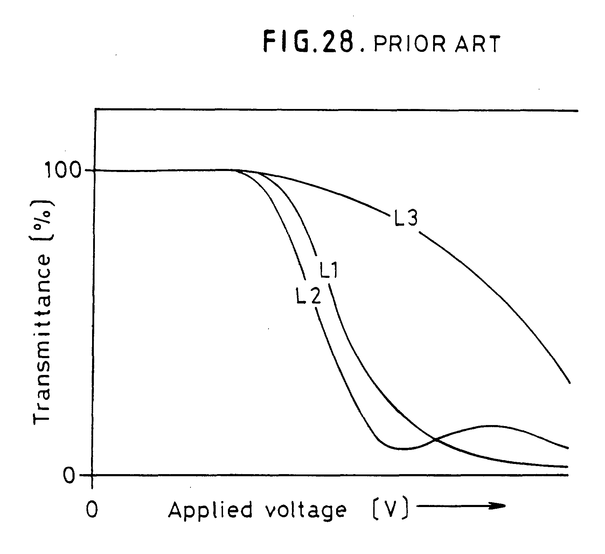

In the TN type LCD, since the liquid crystal molecule has anisotropy in the refractive index (birefringence), the contrast depends on the viewing angle at which a person (a viewer) views the LCD. In general, in the normally white mode of LCD in which light is transmitted during the no voltage application so as to perform a white display, when the LCD is viewed in the direction perpendicular to the surfaces of the substrates in a state where a voltage is applied across the electrodes formed in the respective substrates which sandwich the liquid crystal layer, the transmittance of light is decreased as the applied voltage value becomes high, as is shown by solid line L1 in Figure **28**. When the voltage value is saturated, the transmittance becomes substantially equal to zero. Accordingly, even when a much higher voltage is applied, the transmittance remains at substantially zero.

When the viewing angle is inclined from the direction perpendicular to the substrate face to the positive viewing angle direction, the applied voltage to transmittance characteristics are varied as is shown by the solid line **L2** in Figure **28**. Specifically, as the applied voltage becomes high, the transmittance is decreased to some extent. When the applied voltage exceeds a specific value, the transmittance is increased. Then, the transmittance is gradually decreased. Therefore, when the viewing angle is inclined in the positive viewing angle direction, there occurs a phenomenon in that the black and the white (the negative and positive) of the image are reversed at a specific angle. This phenomenon occurs because the liquid crystal molecule in the liquid crystal layer has the tilt angle, and the refractive index is varied depending on the viewing angle. This phenomenon causes a serious problem for a person viewing the image.

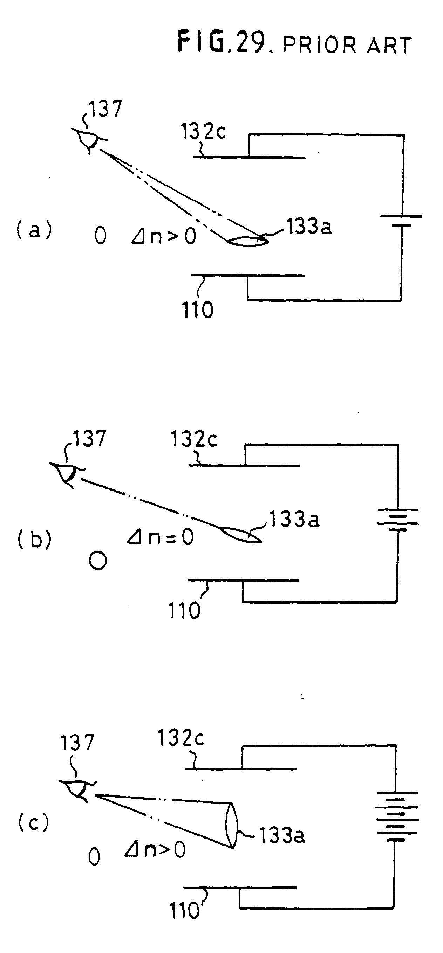

Referring to Figure **29**, the problem will be described in detail. As is shown in Figure **29(a)**, when the applied voltage is zero or a relatively lower voltage, the center molecule **133a** of the liquid crystal layer is observed in the form of an ellipse by the viewer **137** positioned in the positive viewing angle direction. As the applied voltage is gradually increased, the center molecule **133a** is moved in such a manner that the longer axis becomes aligned along the direction of the electric field, i.e., the direction perpendicular to the substrate face. Accordingly, the center molecule **133a** is momentarily observed in the form of a circle by the viewer **137**, as is shown in Figure **29(b)**. As the voltage is further increased, the center molecule **133a** becomes substantially in parallel to the electric field direction. As a result, the center molecule **133a** is observed again in the form of an ellipse by the viewer **137**, as is shown in Figure **29 (c)**. In this way, the reverse phenomenon occurs.

If the viewing angle is tilted in the negative viewing angle direction, the variation of the light transmittance is relatively small, as is shown by the solid line **L3** in Figure **28**. As a result, the contrast is greatly degraded.

The above-described reverse phenomenon in the positive viewing angle direction and the degradation of contrast in the negative viewing angle direction cause serious problems for the viewer, and they result in doubts about the display properties of the LCD.

A technique for suppressing the reverse phenomenon in the TN mode LCD is described in, for example, Japanese Laid-Open Patent Publication No. 2-12. According to the technique, in the active matrix type LCD, a display electrode constituting a picture element is divided into an inner electrode and an outer electrode. Changing the conditions of the electric field applied to the liquid crystal molecules on the inner electrode side from those of the electric field applied to the liquid crystal molecules on the outer electrode side is an attempt to improve the viewing angle characteristics.

However, the technique disadvantageously necessitates a variety of the electrode patterns, so that the production process and the driving method become complicated. Moreover, the resulting improvement of the viewing angle characteristics is not considered as being remarkable.

JAPAN DISPLAY '92, pages 591-594, and page 886 describe the following two methods. In one method, the surface of the aligning film is unidirectionally rubbed, and then a resist is deposited on a part of the aligning film. Then, the rubbing is performed in the direction reverse to the previous rubbing direction. Thereafter, the resist is removed. As a result, the aligning film is provided with different aligning conditions caused by the different -rubbing directions between the aligning film surface covered with the resist and the aligning film surface not covered with the resist, so as to differentiate the pretilt angles. In the other method, polyimide aligning films made of different materials are juxtaposed and then they are subjected to the rubbing treatment. As a result, a plurality of pretilt angles are formed on the aligning films depending on the materials thereof.

However, if the resist is deposited on the surface of the aligning film, the alignment regulating property of the aligning film surface is greatly deteriorated. In the method for forming the polyimide aligning films of different materials, the patterning of the aligning films requires complicated process steps. For these reasons, the above methods are not practical.

In another attempt to eliminate the reverse phenomenon in the positive viewing angle direction and the contrast degradation in the negative viewing angle direction, a rectangular region **119** in which the aligning direction of liquid crystals is different from that in the other region is formed in part of the picture element shown by a dotted line in Figure **26**. In more detail, both the regions of positive viewing angle and negative viewing angle are formed in one picture element, so that the contrast degradation in the negative viewing angle is compensated, and the reverse phenomenon in the positive viewing angle is suppressed.

However, in the above method, as the time elapses, the aligning condition of the rectangular region formed in part of the picture element may be absorbed by the aligning condition of the other region. In addition, in the boundary area between the rectangular region and the other region (an area indicated by dimension line C in Figure 27), a disclination line occurs, i.e., the liquid crystals cannot be driven by the influence of both aligning conditions. This causes the contrast to be degraded.

SID 1992 International Symposium - Digest of Technical Papers, p 798 - 802 illustrates the conventional approach to providing a liquid crystal display device in which a display portion contains regions of two different liquid crystal alignments. SID 1992 International Symposium - Digest of Technical Papers, p 798 - 802 discloses a liquid crystal display device in which an aligning layer has a first region of a first material, and a second region of a different material. The first material induces a first pretilt angle in the liquid crystal molecules, and the second material induces a different pretilt angle in the liquid crystal molecules.

The present invention provides a method of producing a liquid crystal display apparatus as claimed in claim 1.

Preferred features of the invention are set out in the dependent claims.

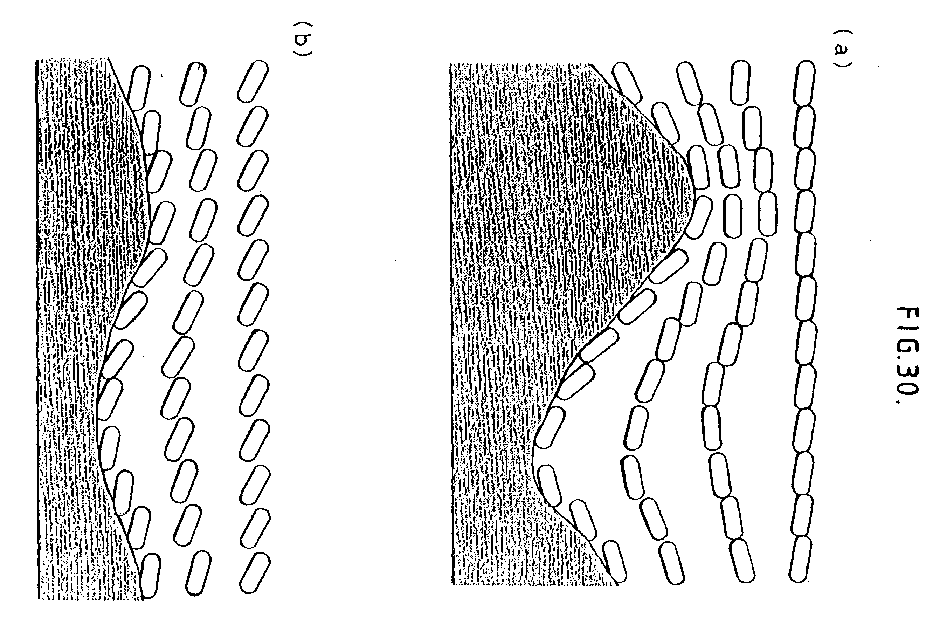

The aligning film formed on the substrate surface has a plurality of prescribed regions with various aligning conditions. The various aligning conditions are caused by the roughness of the aligning film surface. In accordance with the roughness of the aligning film surface, the inclination angles of the liquid crystals in the liquid crystal layer which are in the vicinity of, but not in contact with, the aligning film surface are determined. Therefore, if the degree of the roughness is varied for the prescribed regions, the pretilt angles in the liquid crystal layer are also changed for the prescribed regions. In the case where the roughness is large, as is shown in Figure **30(a)**, there is a large difference between the pretilt angle of the liquid crystal molecules in contact with the aligning film surface and the inclination angle of those remote from the aligning film surface, so that a dynamic control of liquid crystal molecules can be performed. Figure **30(b)** shows the influence of the roughness on the pretilt angles in the liquid crystal layer direction in the case where the roughness is small.

This invention can be applied to the manufacture of a scattering mode LCD. The light incident on the LCD in which a plurality of minute discontinuous aligning regions are formed in one and the same liquid crystal cell according to the method of the invention is scattered by the minute regions with different aligning conditions from each other (in the case where no voltage is applied to the liquid crystal cell). When a predetermined voltage is applied between the paired substrates (to the liquid crystal cell), the liquid crystal molecules can be aligned uniformly. As described above, the aligning uniformity is changed based on the voltage applied to the liquid crystal layer, so as to scatter or not to scatter the light. In this way, it is possible to perform the light switching operation.

In an LCD produced according to the method of the invention at least two types of aligning conditions can be provided for the liquid crystal molecules in one and the same liquid crystal cell, so that the resulting LCD can have a plurality of viewing angle conditions. Therefore, the variation in refractive index in the positive viewing angle direction is made smaller. In addition, the reverse phenomenon and the contrast degradation can be suppressed.

## BRIEF DESCRIPTION OF THE DRAWINGS

Figure **1** is a cross-sectional view schematically showing a liquid crystal layer between substrates of which the alignment is controlled.

Figure **2** is a schematic view of a substrate in an LCD according to the first example.

Figure **3** is a cross-sectional view schematically showing an alignment controlling method.

Figure **4** is a cross-sectional view showing a state where the pretilt angles are varied for respective picture elements by light irradiation shown in Figure **3**.

Figure **5** is a diagram illustrating the light irradiation dependence of the pretilt angle.

Figure **6** is a diagram showing the definition of the average roughness.

Figure **7** is a diagram illustrating the average roughness dependence of the pretilt angle.

Figure **8** is a cross-sectional view schematically showing another alignment controlling method according to the invention.

Figure **9** is a cross-sectional view showing a state where the pretilt angles are varied for respective picture elements according to the method shown in Figure **7**.

Figures **10(a)** to **10(e)** are cross-sectional views showing an exemplary production process of an LCD in the fourth example according to the invention.

Figures **11(a)** to **11(d)** are cross-sectional views showing an exemplary production process of an LCD in the fifth example according to the invention.

Figures **12(a)** to **12(c)** are cross-sectional views showing an exemplary production process of an LCD in the fifth example according to the invention.

Figures **13(a)** to **13(f)** are cross-sectional views showing an exemplary production process of a substrate in the seventh example.

Figures **14(a)** and **14(b)** are cross-sectional views showing another exemplary production process of a substrate in the seventh example.

Figure **15** is a schematic cross-sectional view showing an LCD in the eighth example.

Figure **16** is a plan view showing an LCD producible by a method of the ninth example according to the invention.

Figure **17** is a cross-sectional view showing the LCD shown in Figure **16**.

Figure **18** is a plan view showing another LCD producible by a method of the ninth example according to the invention.

Figure **19** is a plan view showing an LCD producible by a method of the tenth example according to the invention.

Figure **20** is a cross-sectional view of the LCD shown in Figure **19**.

Figure **21** is a plan view showing another LCD producible by a method of the tenth example according to the invention.

Figure **22** is a plan view showing still another LCD producible by a method of the tenth example according to the invention.

Figure **23** is a plan view showing an LCD producible by a method of the eleventh example according to the invention.

Figure **24** is a cross-sectional view of the LCD shown in Figure **23**.

Figure **25** is a plan view showing another LCD producible by a method of the eleventh example according to the invention.

Figure **26** is a plan view showing a conventional LCD.

Figure **27** is a cross-sectional view of the conventional LCD shown in Figure **26**.

Figure **28** is a diagram illustrating the applied voltage to transmittance characteristics in a conventional normally white mode LCD.

Figures **29(a)** to **29(c)** are diagrams illustrating the reverse phenomenon in the LCD.

Figures **30(a)** and **30(b)** are schematic diagrams showing the degrees of roughness of the aligning film surface, and the influence of the roughness on the pretilt angles of the liquid crystal layer. Figure **30(a)** shows a case where the roughness is large. Figure **30 (b)** shows a case where the roughness is small.

## DESCRIPTION OF THE PREFERRED EMBODIMENTS

Example 1 (Comparative Example)

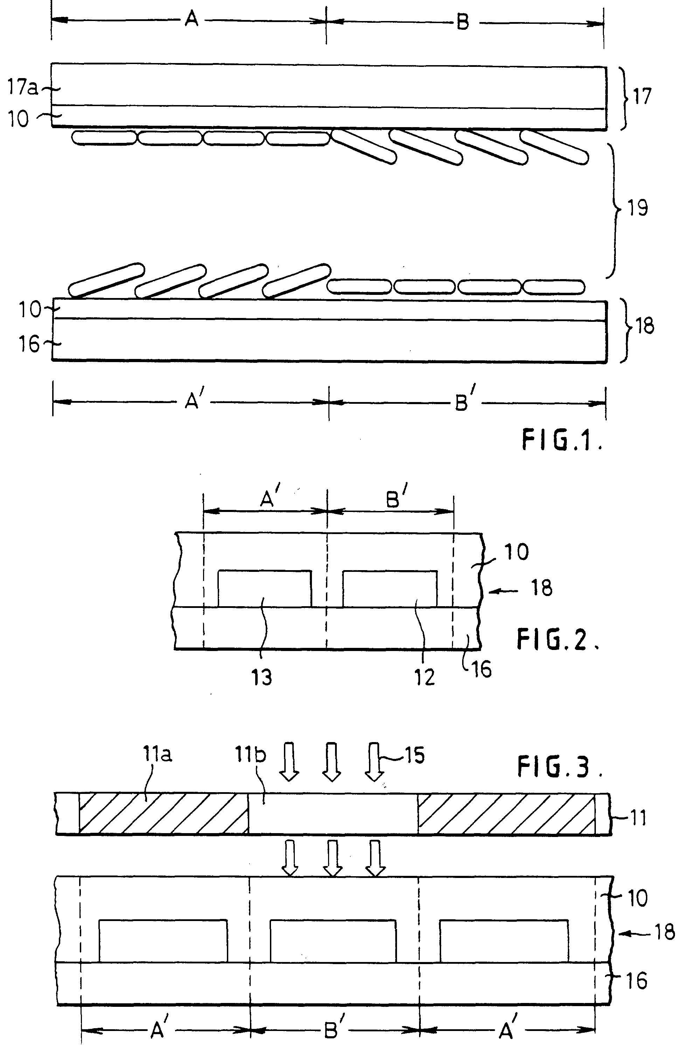

Figure **1** is a cross-sectional view showing two picture elements in an LCD. The LCD which is an active matrix type includes a liquid crystal layer **19** provided between an active matrix substrate **18** and a counter substrate **17** which are disposed so as to face each other. In the counter substrate **17**, a counter electrode (not shown) and an aligning film **10** are formed in this order on the surface of a base substrate **17a** which faces the liquid crystal layer **19**.

As is shown in Figure **2**, in the active matrix substrate **18**, pixel electrodes **12** and **13** are formed in picture element portions **A'** and **B'** on an insulating base substrate **16** made of glass or the like. An aligning film **10** is formed on an entire surface of the substrate **16** so as to cover the pixel electrodes **12** and **13**.

The LCD with the above construction is produced in the following manner.

First, as shown in Figure **1**, the active matrix substrate **18** and the counter substrate **17** are formed. At this time, the aligning film **10** is formed as an outermost layer for each of the substrates **17** and **18**. Either of the substrates **17** or **18** can be produced prior to the other.

Next, the respective aligning films **10** and **10** are subjected to the rubbing treatment, and then the light irradiation step which will be described below is performed.

Next, the substrates **17** and **18** are attached to each other in such a manner that the surfaces of the substrates **17** and **18** on which the aligning films are formed face the inner side. Then, liquid crystals are injected between the substrates **17** and **18**, so as to form a liquid crystal layer **19**. Thus, the production is completed. It is appreciated that a peripheral circuit such as a drive circuit can be additionally mounted, if necessary.

In the first example, a polyimide (PI) film which is one of the organic polymer films is used for the aligning film **10**. A polyimide type polymer includes a polymer main chain, and the main chain direction of the polymer main chain in the surface of the polyimide film is aligned along the rubbing direction by the rubbing treatment which is later performed. Accordingly, it is considered that the liquid crystals which are in contact with the aligning film **10** of polyimide film are aligned in the rubbing direction.

Figure **3** schematically shows a light irradiation process in a comparative production method of an LCD. A mask **11** is disposed on the substrate **16** of the active matrix substrate **18**, and the aligning film **10** is irradiated with light **15**. The hatched portion **11a** in Figure **3** is a light blocking portion which substantially does not transmit the light **15**. A non-hatched portion **11b** is a light transmitting portion which substantially transmits the light **15**. Regions **A'** and **B'** of the aligning film **10** are a non-irradiated region and an irradiated region, respectively. The irradiation process of the light **15** can be performed at a certain time after the formation of the aligning film **10**. Specifically, the process may be performed after the aligning film **10** is applied, after a first curing is performed, after the aligning film **10** is rubbed, or after the substrate **16** is cleaned after the rubbing. Alternatively, the process can be performed after the counter substrate (not shown) is attached to the substrate **16**. In such a case, it is necessary to use light at a wavelength which can pass through the substrate (e.g., glass) since the light is incident via the counter substrate. Before or after the irradiation of the active matrix substrate **18**, the light irradiation is performed to the counter substrate **17**. At this time, the light irradiation is performed in such a manner that the regions **A** and **B** as shown in Figure **1** correspond to an irradiated region and a non-irradiated region.

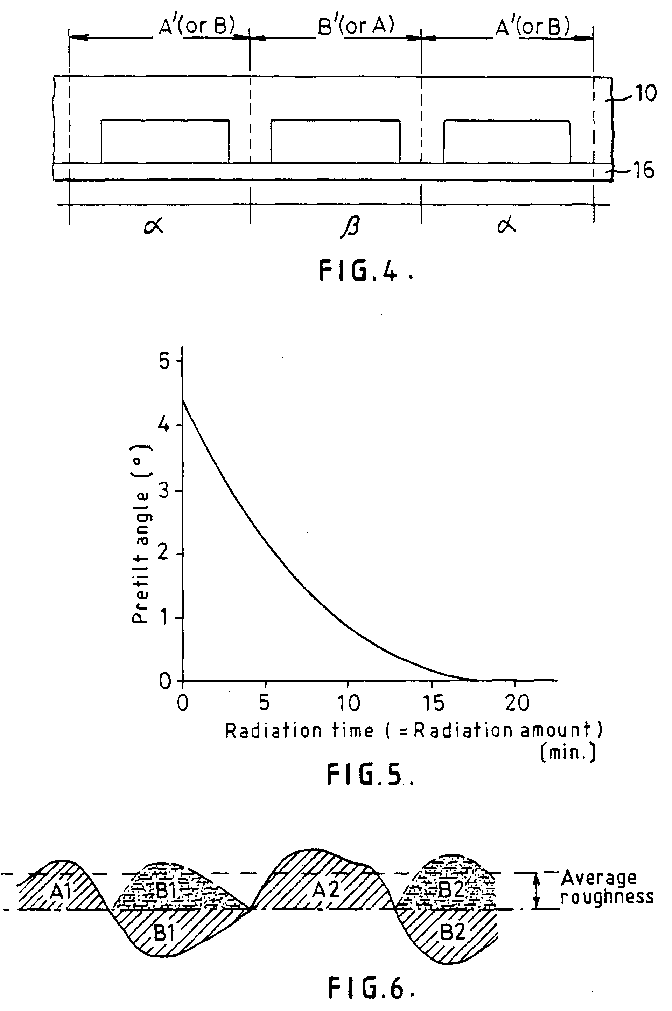

Figure **4** shows that the pretilt angle of liquid crystal in the irradiated region is different from the pretilt angle of liquid crystal in the non-irradiated region. In the non-irradiated regions **A'** and **B**, the pretilt angle of liquid crystal is α. In the irradiated regions **A** and **B'**, the pretilt angle of liquid crystal is β.

If a plurality of regions with different pretilt angles are formed in one and the same substrate, and a region with a large pretilt angle is combined with a region with a small pretilt angle between the pair of substrates, the aligning conditions are regulated by the side on which the pretilt angle is larger. By utilizing the phenomenon, the alignment of liquid crystals in a desired region can be made to be aligned along a desired direction. As described above, at least two types of aligning conditions are provided for the liquid crystals in one and the same liquid crystal layer, so that the variation in refractive index in the positive viewing angle direction is made smaller, and the viewing angle is widened. In addition, the negative viewing angle characteristics can be improved.

Based on the following principle, the pretilt angle of the liquid crystal layer **19** which is in contact with the aligning film **10** is changed by the above-described light irradiation.

When the aligning film **10** is irradiated with the light **15**, the chemical structure of the aligning film **10** is changed by the energy application. More specifically, when the polyimide aligning film **10** is irradiated with ultraviolet rays (UV rays) **15**, $O_3$ (Ozone) is generated. By the action of $O_3$, the alkyl groups of the polyimide are oxidized so as to be carboxyl groups. As a result, the polarity of the surface of the aligning film **10**, and hence the pretilt angle of the liquid crystal molecule which is the polarity molecule is changed. This mechanism is an assumption. In another assumption, it is considered that the pretilt angle is changed due to the change of the surface tension of the surface of the aligning film 10 by the light irradiation.

The relationship between the light irradiation to the aligning film and the change in the pretilt angle was experimentally confirmed. Figure 5 is a graph showing the light irradiation dependence of the pretilt angle of the liquid crystal molecule on the aligning film surface. As is seen from the graph, as the time of the light irradiation increases, i.e., as the light irradiation amount is increased, the pretilt angle is made far smaller.

In another mechanism, it was also experimentally confirmed that the degree of roughness of the aligning film surface is changed by applying energy by light irradiation for the aligning film. It was experimentally confirmed that the change in the degree of roughness of the aligning film causes the pretilt angle to be changed, which will be described below.

As one measurement for indicating the roughness degree of the film surface, the average roughness is defined in Figure **6**. The actual surface of the aligning film is indicated by a solid line curve in the figure. The intermediate plane level of the actual surface is indicated by a one-dot chain line. The intermediate plane is defined as being parallel to a plane which satisfies the following expression (1) and in which the square of the difference from the actual surface is minimum;

$$(A1 + A2 + \cdots + An) = (B1 + B2 + \cdots Bn) \qquad (1)$$

where An represents the area of each convex portion of the actual surface (n is a natural number), and Bn represents the area of each concave portion.

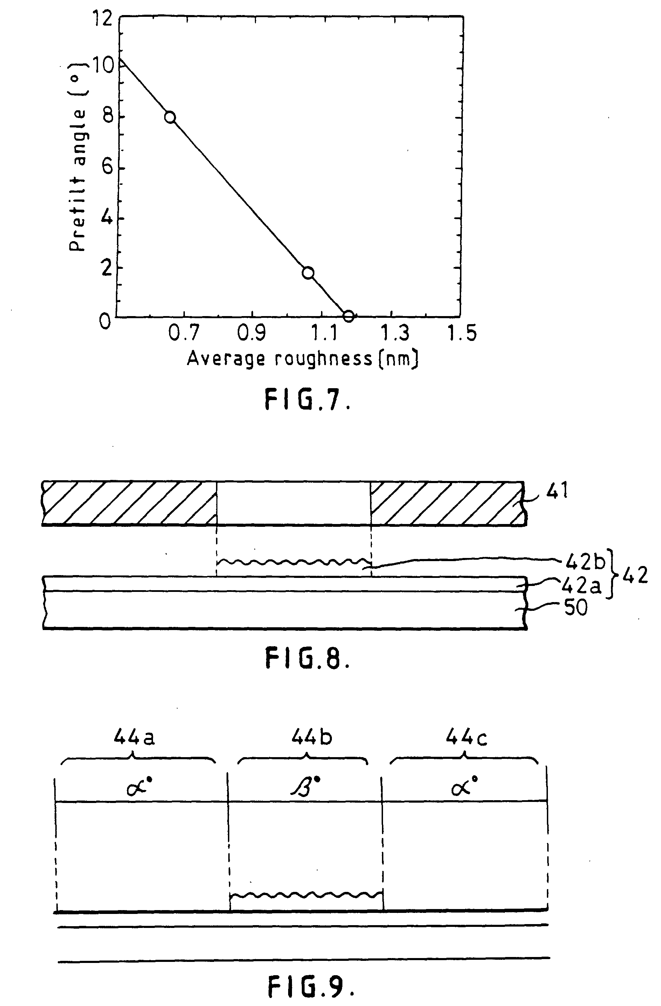

The average roughness of the film surface is defined as an arithmetic average of the absolute value of the difference between the intermediate plane and the actual surface. In the graph of Figure **7**, the horizontal axis indicates the average roughness, and the vertical axis indicates the pretilt angle. As seen from the graph, as the average roughness of the aligning film surface is increased the pretilt angle is linearly decreased. By controlling the light irradiation amount, and hence by controlling the roughness of the aligning film surface, the pretilt angle of liquid crystal can be suitably controlled in the range of 0° to about 15°. That is, various LCDs with different pretilt angles can be produced.

In Example 1, the mask **11** is used for the light irradiation process. For the mask **11**, for example, a mask which is similar to a photomask usually used in the photolithographic technique can be used. Alternatively, a mask pattern is directly formed on the aligning film **10** by using the photolithographic technique, and then the mask is removed after the light irradiation. However, the case using the patterning of a resist includes a drawback in that the aligning film 10 is largely contaminated.

It is unnecessary to completely block the light **15** by the blocking portion covered with a mask. It is sufficient to make a difference in transmittance between the blocking portion and the non-blocking portion. For example, a material having two or more regions with different transmittances is provided on the substrate **16** as the mask **11**. In this way, two or more types of regions with different alignments can be formed in one and the same LCD. In addition, by using the converged light, a predetermined region may be selectively irradiated. The micro-structure process using the mask or the converged light can be conducted in the order of about several microns. Therefore, it is possible to form minute areas with different aligning conditions in a desired plane form. For example, in Example 1, each picture element is selectively irradiated with the light using the mask **11**. Alternatively, one picture element may be divided into regions which are irradiated and not irradiated with the light **15**. In addition to the difference between the irradiated region and the non-irradiated region, the irradiated regions can be differentiated by changing the light intensity. Alternatively, all the regions are irradiated with light, but the light intensities for prescribed regions can be changed (for example, for each picture element). In such a case, as the number of intensity variations is increased, the aligning conditions can be minutely and locally changed.

In the above example, the aligning film **10** of polyimide film is irradiated with the ultraviolet rays. It is appreciated that ultraviolet rays, visible rays, infrared rays, and any combinations thereof can be used for the light **15**. Especially when a high energy can be easily used for changing the aligning conditions, it is preferred that the ultraviolet rays with wavelengths of 400 nm or less are used. The light having the wavelength can be surely obtained by using, for example, a high pressure mercury lamp. When the aligning film **10** is irradiated with the ultraviolet rays (UV rays), it is preferred that the irradiation is performed under conditions from 1000 (mJ/cm$^2$) to 10000 (mJ/cm$^2$). As for another light, a laser beam having the same range of wavelengths as those of ultraviolet rays, visible rays or infrared rays can be used. When the laser beams are used, the above effects can be attained in a shorter time period because the energy density is high. Instead of the above light irradiation process, the aligning conditions of the aligning film **10** can be changed locally by another energy beam irradiation. For example, the irradiation of electron beams, ion beams, X-rays or the like can locally change the chemical structure of the aligning film **10**.

In this example, the aligning film **10** is formed of a polyimide film. It is appreciated that the aligning film **10** may be formed of other materials. In such a case, the irradiation light is preferred to be appropriately selected based on the kind of material. Alternatively, an inorganic aligning film containing silicon nitride, silicon oxide, magnesium fluoride, a metal or the like as the main component can be used. In such a case, it is necessary to perform the irradiation of light with high energy such as ultraviolet laser beams, electron beams, or the like.

Example 2 (Comparative Example)

Example 2 describes a method by which the surface of the aligning film is made rough by the surface treatment. The substrate structure is the same as that in Example 1.

In Example 2, the method is performed as follows. First, polyimide as the aligning film material is applied by spin-coating, printing, or the like, so as to form the aligning film. The aligning film materials may include organic films of polyimide, polyamide, polystyrene, polyamideimide, epoxyacrylate, spiranacrylate, polyurethane, and the like.

Next, after the aligning film is cured, the aligning film is rubbed with a burnishing cloth. That is, a first surface treatment is performed.

Thereafter, the aligning film surface is in contact with an alkaline solution, which is a second surface treatment. By utilizing the non-uniform solubility of the solution tc the aligning film, a desired degree of roughness is formed on the aligning film surface. As the alkaline solution, for example, 0.5% NaOH aqueous solution, 2.38% TMAH (tetra methyl ammonium hydroxide) aqueous solution, or the like can be used. Instead of the alkaline solution it is possible to use an acidic solution containing a hydrofluoric acid, a nitric acid or both of them as the main component. Alternatively, ozone or ammonia gas which is a reaction gas can be used. Alternatively, a plasma in a gas containing argon or krypton as the main component can be used.

Example 3

Example 3 describes the case where the surface of an underlying film under the aligning film is made rough, the roughness of the underlying film affects the aligning film, so as to make the aligning film surface rough. The roughness at the surface of the underlying film can be made by any one of the methods for making the aligning film surface rough described in Examples 1 and 2. Alternatively, a method for adjusting the depositing conditions for the underlying film (hereinafter, referred to as a deposit condition adjusting method) can be used. According to this method, for example in the case where a transparent conductive film is deposited by sputtering, as the density of sputter target is increased, or as the depositing rate is decreased, the surface of the deposited transparent conductive film becomes flat with small roughness. Under the reversed conditions, the surface of the deposited transparent conductive film becomes rough.

The above-described methods can be used solely, or in combination with each other. When the surface is made rough by using light of short wavelength with high energy or an optical energy by a laser or the like, the roughness can selectively be formed by converging the light with light converging means in addition to a mask.

Next, a specific method for making the aligning film surface rough according to this example will be described with reference to Figure **8**.

First, a first transparent conductive film **42a** having a flat surface with small roughness is formed on a substrate **50** (a glass substrate) by sputtering, vapor deposition, or the like. Thereafter, a second transparent conductive film **42b** having a surface with large roughness is formed on a prescribed region of the first transparent conductive film **42a**. The second transparent conductive film **42b** is formed in the following manner. For example, in a sputtering apparatus (or in a deposition apparatus), a film to be the second transparent conductive film **42b** is deposited on the first transparent conductive film **42a** with a metal mask **41** interposed between the target (deposition source) and the substrate **50**, so as to grow the second transparent conductive film **42b** on the prescribed region of the first transparent conductive film **42a**. At this time, by the above-described deposit condition adjusting method, the deposition rate of the second transparent conductive film **42b** is made higher than that of the first transparent conductive film **42a**. As a result, the roughness degree of the surface of the second transparent conductive film **42b** is higher than that of the surface of the first transparent conductive film **42a**. For the first and second transparent conductive films **42a** and **42b**, ITO films are used. Instead of the ITO films, it is appreciated that other materials can also be used.

Next, an aligning film (not shown) is formed so as to cover the underlying films such as the transparent conductive films **42a** and **42b**, and the aligning film is subjected to a rubbing treatment. After the formation of the aligning film, the same process steps as those in the prior art are adopted.

According to Example 3, as is schematically shown in Figure 9, the aligning conditions of the liquid crystals can be changed for each of picture element portions **44a**, **44b**, and **44c**. This is because the aligning conditions of a portion of the aligning film in which the surface of the underlying film (the transparent conductive film) is flat (a portion where the first transparent conductive film **42a** is exposed) are different from those of the other portion of the aligning film in which the surface of the underlying film is rough (a portion where the second transparent conductive film **42b** is formed). Example 3 utilizes a fact that the pretilt angles of liquid crystals can be changed by the difference in the surface conditions of the underlying films (the transparent conductive films **42a** and **42b**). In the picture element portions **44a** and **44c** in which the surface of the underlying film is flat, the pretilt angle remains to be α. In the picture element portion **44b** in which the surface of the underlying film is rough, the pretilt angle changes to be β. In the method for controlling the aligning conditions of the aligning film by using underlying films as in Example 3, any film can be used for the underlying film, as far as the degree of roughness of the underlying film surface can be locally changed.

In Example 3, the methods for making the aligning film surface rough described in Examples 1 and 2 can be used for the method for making the underlying film surface rough. Alternatively, it is possible to use a lift-off method which will be described with reference to Figure **8**. In the lift-off method, a resist pattern film (not shown) having an opening for exposing a prescribed region of the first transparent conductive film **42a** is first formed on the first transparent conductive film **42a**. Such a resist pattern film is formed with a photomask having a pattern corresponding to that of a mask **41** by using a known photolithographic technique.

Next, a film to be the second transparent conductive film **42b** is deposited on the entire surface of the resist pattern film and the first transparent conductive film **42a**. Thereafter, the resist pattern film is removed, so that the portion on the resist pattern film is also removed. As a result, the second transparent conductive film **42b** is formed on the prescribed region of the first transparent conductive film **42a**.

As described above, according to the alignment controlling method of Example 3, the pretilt angles of liquid crystals in one of the same LCD can locally and easily be changed. By using this method, the viewing angle characteristics in TN mode or STN (super twisted nematic) mode can be improved.

According to the method used in Example 3, the resist pattern film may be formed on the transparent conductive film **42a**, but may not be formed on the aligning film. Accordingly, there is no possibility that the aligning film is contaminated by the photolithographic process for forming the resist pattern film.

Example 4

In Example 4, the surface of the transparent conductive film as the underlying film is made rough, and the roughness affects the aligning film disposed above, so as to make the surface of the aligning film rough. As a method for selectively making the surface of the transparent conductive film rough, a method for patterning a resist using a conventional photolithography on part of the transparent conductive film, and then for locally making the surface rough by light irradiation is adopted.

The method for making the aligning film surface rough according to Example 4 will be described below.

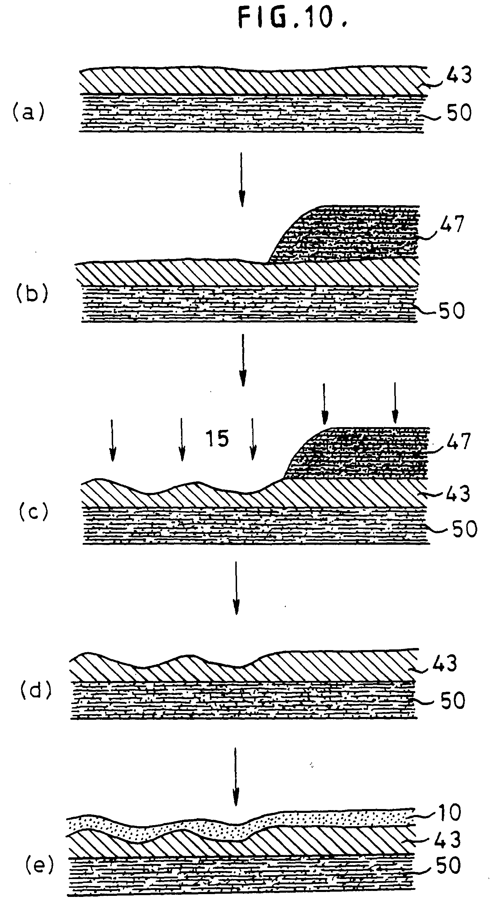

First, referring to Figure **10(a)**, a transparent conductive film **43** is formed on a substrate **50**. Next, as is shown in Figure **10(b)**, a resist **47** is formed on a portion of the transparent conductive film **43**. In this state, as is shown in Figure **10(c)**, the substrate **50** is perpendicularly irradiated with light **15** from the side on which the transparent film **43** is formed. The portion of the transparent conductive film **43** which is covered with the resist **47** is not irradiated with the light, so that the surface condition of the portion is not changed from that at the formation of the transparent conductive film **43**, as is shown in Figure **10(d)**. On the contrary, the chemical structure of the surface of the portion irradiated with the light is changed, so as to make the surface rough.

After the light irradiation, the resist **47** is removed as is shown in Figure **10(d)**.

Finally, as is shown in Figure **10(e)**, on the surface of the substrate **50** on which the resist **47** has been removed, an aligning film **10** is formed so as to cover the transparent conductive film **43**. The difference between the surface conditions of the irradiated and non-irradiated portions of the transparent conductive film **43** affects the surface conditions of the aligning film **10** formed thereon, so that the aligning film **10** includes a rough portion and a flat portion at the surface thereof.

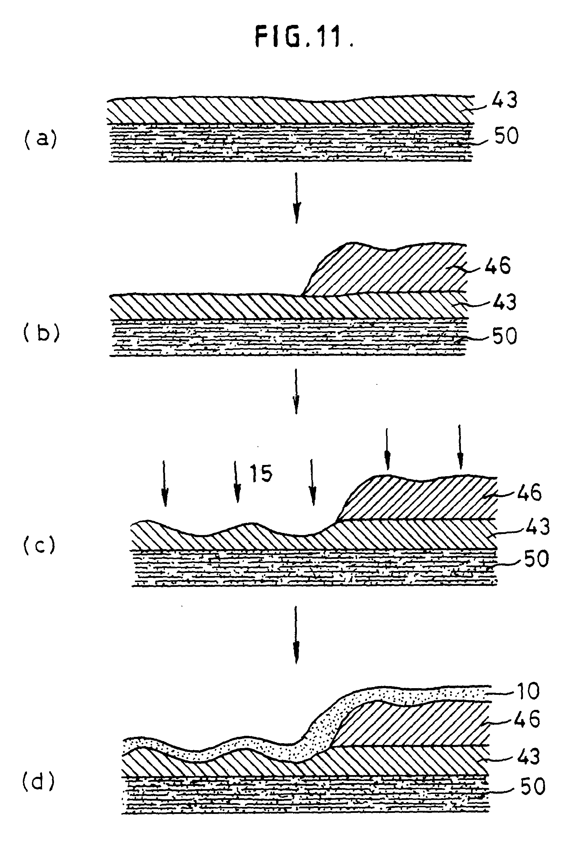

In Example 4, instead of the resist, an insulating film can be used. The process steps in the case of the insulating film are schematically shown in Figure **11**. First, as is shown in Figure **11(a)**, a transparent conductive film **43** is formed on a substrate **50**. Next, as is shown in Figure **11(b)**, an insulating film **46** is formed on a portion of the transparent conductive film **43**. In this state, as is shown in Figure **11(c)**, the substrate **50** is perpendicularly irradiated with light **15** from the side on which the transparent conductive film **43** is formed. Next, an aligning film **10** is formed on the substrate **50**, as is shown in Figure **11(d)**. That is, except for the step of removing the resist, the process steps are the same as in the case of the resist. The degree of roughness of the surface of the insulating film **46** is different from that of the surface of the portion of the transparent conductive film **43** which is not covered with the insulating film **46**, because of the difference in material therebetween. Therefore, the degree of roughness of the surface of the aligning film **10** is locally varied. Moreover, the aligning film is formed while the insulating film remains on the transparent conductive film, so as to cover them. Accordingly, in the region where the insulating film is formed, in addition to the difference in the surface conditions between the insulating film and the transparent conductive film, the difference in the level between the insulating film surface and the transparent conductive film surface is added to the factor of the roughness which affects the aligning film surface.

In the case of using the insulating film, the process is simplified because the step of removing the resist is eliminated. In addition, in terms that the insulating treatment and the aligning control are commonly performed, the production process is simplified, so that an LCD with viewing angle characteristics of high reliability can be provided at a low cost.

In Example 4, in order to form the roughness, a method in which the aligning film is in contact with an acidic or alkaline solution or in contact with a reaction gas or a plasma in a gas may be used.

Example 5

In Example 5, the same as in Examples 3 and 4, the surface of the underlying film of the aligning film is made rough, and the roughness is transferred to the aligning film, so as to make the aligning film surface rough. By forming an insulating film on the rough surface of the transparent conductive film, the degree of roughness of the insulating film is made smaller, so that the various rough conditions are transferred to the aligning film.

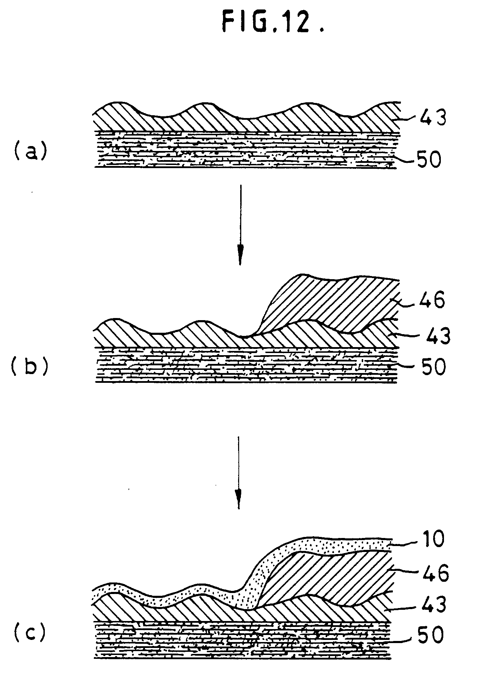

The process steps in Example 5 are schematically shown in Figure **12**.

First, as is shown in Figure **12(a)**, a transparent conductive film **43** is formed on a substrate **50**, and the surface thereof is made rough by light irradiation or another operation. Next, as is shown in Figure **12(b)**, an insulating film **46** is formed on a portion of the transparent conductive film **43**. Accordingly, a reduced degree of roughness is formed at the surface of the insulating film **46**. For the insulating film **46**, silicon nitride, silicon oxide, or the like can be used.

Finally, as is shown in Figure **12(c)**, an aligning film **10** is formed on the surface of the substrate **50** so as to cover the transparent conductive film **43** and the insulating film **46**.

In the portion in which the insulating film is formed, in addition to the difference in the surface conditions between the insulating film and the transparent conductive film, the difference in level between the insulating film surface and the transparent conductive film surface is also the factor of the roughness which affects the aligning film surface.

In Example 5, it is possible to perform light irradiation or another operation for forming the roughness before the formation of the insulating film. In addition, the insulating treatment and the aligning control are commonly performed, so that the production process is simplified, so that an LCD with viewing angle characteristics of high reliability can be provided at a low cost.

Instead of the aforesaid examples in which the degree of roughness is regulated for each region, this example can be implemented in such a manner that the degree of roughness is set substantially uniformly in each region, but the surface of the aligning film is made rough depending on the thickness of the aligning film. In other words, in a region where the aligning film is thin, the roughness of the underlying film surface is largely transferred, so that the roughness of the aligning film surface in this region is larger than in another region where the aligning film is thick.

In Example 5, in order to form the roughness, the light irradiation, a method in which the aligning film is in contact with an acidic or alkaline solution or in contact with a reaction gas or a plasma in a gas may be used.

Example 6

In Example 6, the underlying film is formed of different materials for prescribed regions. Thus, the nonuniformity in the surface treatment due to the different materials of the underlying film is utilized so as to make the underlying film surface rough. Thereafter, an aligning film is formed on the underlying film having the rough surface, so that the aligning film can have a plurality of regions with different levels.

By the above-described Examples 1 to 6, regions with different aligning conditions, i.e., different viewing angle characteristics can easily be formed in one and the same LCD in a desired pattern. Therefore, in each of Examples 1 to 6, aligning conditions of liquid crystals can be different for various minute areas. Accordingly, it is possible to improve the viewing angle characteristics which cause a problem when an aligning film is used for aligning the liquid crystals in a certain direction. Moreover, it is possible to improve the reverse phenomenon in the positive viewing angle direction which is conventionally considered as a serious problem. In addition, it is unnecessary to divide each pixel electrode, so that the production process and driving method is simplified.

In each of Examples 1 to 6, different viewing angle characteristics are formed, so that the viewing angles in the TN mode and the STN mode can be improved. For example, in the case where an LCD of TN mode type is disposed between a pair of polarizing plates, in order to improve the viewing angle characteristics such as the reverse phenomenon of liquid crystal display, it is considered that the refractive indices of the liquid crystal molecules in the vertical direction (in the perpendicular direction with respect to the viewer) are preferably set equal to each other regardless of the viewing angle. That is, in the positive viewing angle direction, it is sufficient to suppress the change of anisotropy ($\Delta$ n) of the refractive index in the vertical direction from large to 0 and then to large (in the reverse direction), as the viewing angle is made deeper from the position directly above the LCD (in the direction perpendicular to the substrate face).

The LCD in each of Examples 1 to 6 can be applied to a scattering mode LCD. In the LCD, a plurality of different aligning conditions are formed for respective minute areas, so that the light incident on the liquid crystal layer is scattered when no voltage is applied to the liquid crystal layer because the aligning angles of liquid crystal molecules are different from each other for respective minute areas. When a voltage is gradually applied to the liquid crystal layer, the liquid crystal molecules gradually stand, so the liquid crystal layer transmits the incident light. As described above, based on the voltage applied to the liquid crystal layer, it is possible to perform the light switching operation.

A specific substrate structure applied to each of Examples 1 to 6 can be a segment structure, a dot matrix structure, or the like. Alternatively, the present invention can be applied to any substrate structure which is conventionally used in the LCD.

The degree of roughness in each of Examples 1 to 6 may be changed for each picture element, for each one of plural sub-areas obtained by dividing one picture element, or for a predetermined or uncertain number of picture elements. In the case where the degree of roughness is changed for each picture element, a finer image can be obtained.

Example 7 (Comparative Example)

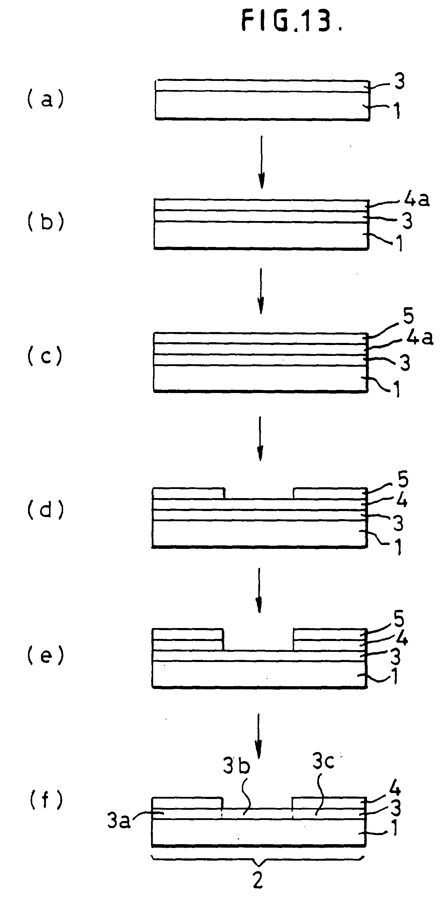

Figure **13(f)** is a cross-sectional view showing the substrate of this example. The substrate is used in an LCD. In the substrate, a transparent electrode **3** is formed in a portion corresponding to the picture element portion **2** on the transparent substrate **1** made of a glass plate or the like. An aligning film **4** is formed on portions **3a** and **3c** of the transparent electrode **3**. The aligning film **4** is not formed on the remaining portion **3b**.

The actual structure of the transparent substrate 1 on which the picture element portion **2** is formed can be suitably selected, and any substrate structure which is conventionally used in the LCD can be applied. In the transparent electrode **3**, the positions of the portions **3a** and **3c** on which the aligning film **4** is formed and the portion **3b** with no aligning film **4** can be appropriately set.

The above-described substrate can be produced, for example, in the following manner.

First, by a known manner, as is shown in Figure **13(a)**, a transparent electrode **3** is formed on a portion corresponding to the picture element portion **2** on the transparent substrate **1**. Next, the surface of the transparent electrode **3** is subjected to an aligning treatment. As the aligning treatment, for example, a rubbing treatment can be used. A rubbing treatment for a film made of inorganic material such as a transparent electrode requires stronger conditions (including the kind of rubbing cloth, the strength of rubbing, and the like) than the rubbing treatment for a film made of organic materials. In this example, the rubbing conditions are set such that a cloth made of rayon is used and the strength is set to be three times as large as the rubbing for an organic film.

Thereafter, as is shown in Figure **13(b)**, a film **4a** to be an aligning film is formed on the substrate of the above-mentioned state. In this example, the film **4a** is a polyimide film.

Next, as is shown in Figure **13(c)**, a resist **5** is applied onto the film **4a**. In this example, a negative type resist is used. By using the resist **5** as a mask, the film **4a** is exposed to light and the resultant film **4a** is developed. As a result, part of the film **4a** is removed, as is shown in Figure **13(d)**.

Next, as is shown in Figure **13(e)**, the film **4a** is patterned, so as to form an aligning film **4**.

Thereafter, as is shown in Figure **13(f)**, the resist **5** is removed, and the surface of the remaining aligning film **4** is subjected to the usual rubbing treatment. The polyimide type polymer includes a polymer main chain, and the longer chain direction of the polymer main chain in the polyimide film surface is aligned in the rubbing direction as the result of the rubbing treatment. Accordingly, it is considered that the liquid crystal molecules which are in contact with the polyimide film are aligned in the rubbing direction. As described above, the substrate for the LCD can be obtained.

The above production process can be performed without the rubbing treatment for the transparent electrode **3**. In both the cases, the pretilt angle on the transparent electrode **3** is usually smaller than the pretilt angle on the aligning film **4**, so that different aligning conditions can be formed on one and the same substrate.

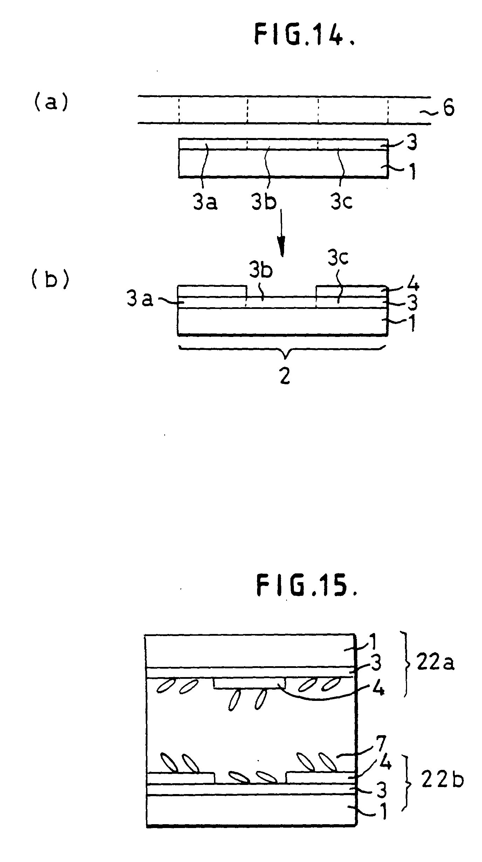

The aligning film **4** can be formed by printing using a pattern 6 on which a desired pattern is formed, as is shown in Figure **14(a)**. According to this method, depending on the pattern formed on the pattern 6, portions **3a** and **3c** on which the aligning film **4** is printed, and a non-printed portion **3b** are formed on the transparent electrode **3**. Accordingly, only by printing the aligning film, an aligning film **4** which is patterned can be obtained, as is shown in Figure **14(b)**. Also, in this case, it is possible to perform or not to perform the rubbing treatment for the transparent electrode **3**.

In this way, two substrates each having different aligning conditions are produced, and they are attached to each other so as to form an LCD in such a manner that a portion in which the aligning film is formed on one substrate opposes a portion in which the aligning film is not formed on the other substrate. As a result, the viewing angle for the LCD can be improved.

Example 8 (Comparative Example)

Figure **15** shows a schematic cross-sectional view of a liquid crystal cell portion in an LCD of Example 8. The liquid crystal cell includes substrates **22a** and **22b** with different aligning conditions. The substrates are disposed opposite to each other in such a manner that a portion of the substrate **22a** on which an aligning film is formed faces a portion of the substrate **22b** on which an aligning film is not formed.

The substrates **22a** and **22b** can be produced by the method described in Example 7. In the case where the transparent electrode is not subjected to the rubbing treatment, it is possible to control the aligning conditions by using a treatment agent, which is used in order to enhance the printing ability of the aligning film, applied onto the transparent electrode. In the case where the TN type LCD is produced, the application amount of the chiral agent is adjusted so as to obtain the continuous twist of 90° within the predetermined liquid crystal cell thickness.

In both cases, the pretilt angle on the transparent electrode **3** is usually smaller than the pretilt angle on the aligning film **4**. Therefore, the aligning conditions of the liquid crystal molecules **7** are regulated by the substrate on which the aligning film **4** is formed, so that the aligning directions are differently directed as is shown in Figure **15**. Therefore, it is possible to form regions with different aligning conditions in a selected pattern in one and the same liquid crystal cell, so that two or more different viewing angle directions can be commonly provided in one and the same liquid crystal cell.

As described above, a plurality of different viewing angle directions are commonly provided, so that the viewing angle characteristics can be improved and the viewing angle can be widened. In the TN type or the STN type LCD, the reverse phenomenon and the contrast degradation can be eliminated.

The portions where the aligning film is formed and is not formed on the transparent electrode can be formed alternately for respective picture elements, and alternatively can be formed by dividing one picture element into two or more sub-areas. When one picture element is divided and the portions are formed, a finer image can be obtained.

Example 9

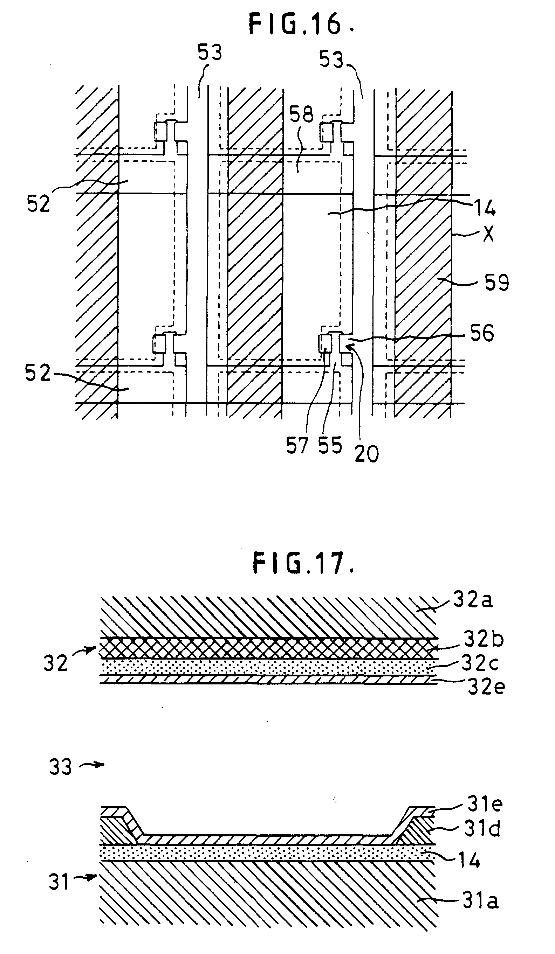

Figure **16** is a plan view showing one example in which the present invention is applied to the TN mode active matrix type LCD. Figure **17** is a cross-sectional view thereof. In the LCD, as is shown in Figure **17**, an active matrix substrate **31** is disposed so as to oppose a counter substrate **32**, and a liquid crystal layer **33** is sealed therebetween. In the active matrix substrate **31**, a plurality of scanning lines **52** and a plurality of signal lines **53** are formed so as to cross each other on an insulating substrate **31a** made of glass. In each of the areas defined by the scanning lines **52** and the signal lines **53**, a pixel electrode **14** is disposed. In the vicinity of each of the crossings of the scanning lines **52** and the signal lines **53**, a thin film transistor **20** (hereinafter referred to as a TFT) as a nonlinear element having a switching function is formed. The TFT **20** is electrically connected to one of the scanning lines **52**, one of the signal lines **53**, and the corresponding pixel electrode **14**. The TFT **20** is formed on a gate electrode **55** which is branched from the scanning line **52** on one side of the pixel electrode **14**. The gate electrode **55** opposes a source electrode **56** which is branched from the signal line **53** toward the pixel electrode **14**, and also opposes a drain electrode **57** which is branched from the pixel electrode **14** toward the source electrode **56**. As the TFT **20**, an amorphous silicon TFT is employed in this example. The TFT **20** can be formed on the scanning line **52**.

On the pixel electrode **14**, there is superposed a scanning line **52** which is adjacent to the scanning line **52** including the TFT **20** connected to the pixel electrode **14**. The superposed portion constitutes an additional capacitance **58**. In an alternative case, an additional capacitance line (not shown) is formed separately from the scanning line **52**. In such a case, the additional capacitance **58** can be formed on the additional capacitance line.

Above these electrode lines, that is, above the scanning lines **52** and the signal lines **53**, and above the TFTs **20**, an insulating protective film **31d** is formed in order to prevent short-circuits between the counter substrate **32** and these electrode lines and the TFTs and between the TFTs and the electrode lines. The insulating protective film **31d** can be formed so as to have openings corresponding to respective pixel electrodes **14**.

In the counter substrate **32** which faces the active matrix substrate **31** having the above-described structure, a color filter **32b**, a counter electrode **32c**, and an aligning film **32e** are formed on the insulating substrate **32a** in this order.

When the following process steps are performed for the LCD of this example having the above construction, the LCD which can actually be driven to display can be produced. Specifically, the LCD which can actually be driven to display is produced by a step for forming aligning films **31e** and **32e** on the active matrix substrate **31** and the counter substrate **32**, respectively, a step for performing a rubbing treatment for the aligning film **31e**, a step for attaching the active matrix substrate **31** to the counter substrate **32**, a step for providing a liquid crystal layer **33** by injecting liquid crystals between the substrates **31** and **32**, and other steps, and then a step for mounting peripheral circuits such as a drive circuit.

In the production process, some process steps for providing a plurality of liquid crystal aligning directions in one picture element are performed. In this example, an aligning treatment is performed for the aligning film **31e** of the active matrix substrate **31**, so as to form a liquid crystal layer region **59** in which aligning directions are different over two or more picture elements while two aligning directions exist in one picture element. In other words, the aligning direction of the liquid crystal layer region **59** is reversed from the aligning direction of the other regions. Such aligning conditions can be realized by performing the aligning treatment in a state where a protective film is formed on one of two liquid crystal layer regions with different aligning directions, by removing the protective film, by performing another aligning treatment in a state where another protective film is formed on the other liquid crystal layer region, and then by removing the protective film. In an alternative case, a region of the surface of the pixel electrode **14** is chemically changed by using liquid such as an acidic or alkaline solution, so as to make the surface rough. Thus, the aligning directions are controlled by utilizing the difference in tilt angles or tilt directions between the rough region and the flat region. As a method for making the surface rough, the surface may be chemically changed by plasma, or electromagnetic waves including light, or the surface may be physically changed by solid, gas, plasma, or electromagnetic waves including light.

In the case where the insulating film is formed above and the electrode lines and the TFTs, in order to prevent short-circuits between the substrates and between the electrode lines, the insulating film surface is treated so as to chemically change the surface condition by using liquid such as an acidic or alkaline solution, gas, plasma, or electromagnetic waves including light, or the like, or so as to physically change the surface condition by using solid, gas, plasma, electromagnetic waves including light, or the like. As a result, the aligning directions can be controlled by controlling the tilt angles or the tilt directions.

Accordingly, in this example, a liquid crystal layer region in which aligning directions are different over two or more picture elements while two aligning directions exist in one picture element is formed. Accordingly, a boundary X of liquid crystal regions with different aligning directions is positioned over two or more picture elements. As a result, the free energy included in the boundary is reduced, so that the possibility that one aligning condition is absorbed by the other aligning condition can be avoided. In this way, the anisotropy of refractive indices of liquid crystal molecules is not lost, and it is possible to ensure the optical rotatory power of light. As a result, the viewing angle dependence can be eliminated.

In the above-described example, the aligning treatment is performed for the aligning film **31e** of the active matrix substrate **31**. Alternatively, the aligning treatment may be performed only for the aligning film **32e** of the counter substrate **32**, or for both the aligning films **31e** and **32e** of the substrates **31** and **32**. In such cases, it is possible to eliminate the viewing angle dependence.

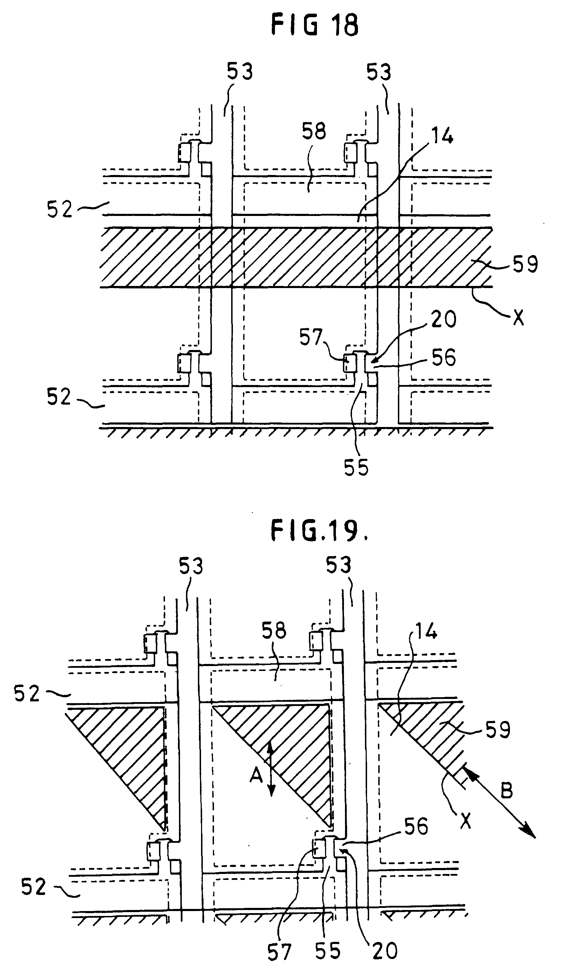

In this example, the boundary **X** between the liquid crystal layer regions with different aligning directions is set so as to be parallel to the signal lines **53**. This invention is not limited to the specific setting. Alternatively, the boundary **X** between the liquid crystal layer regions with different aligning directions may be set to be parallel to the scanning lines **52**, as is shown in Figure **18**. In such a case, it is possible to eliminate the viewing angle dependence for the above-described reasons.

In this example, a liquid crystal layer region in which aligning directions are different over two or more picture elements while two aligning directions exist in one picture element is formed. This invention is not limited to the specific case. Alternatively, the liquid crystal layer region may be provided in such a manner that aligning directions are different over two or more picture elements while two or three or more aligning directions exist in one picture element.

In addition, it is sufficient for the boundary between the liquid crystal layer regions with different aligning directions to exist over two or more picture elements. Accordingly, it is unnecessary that the boundary continues over all the picture elements in one column among the picture elements disposed in a matrix. In some cases, the boundary may be divided in one column.

Example 10

Another example of the invention will be described.

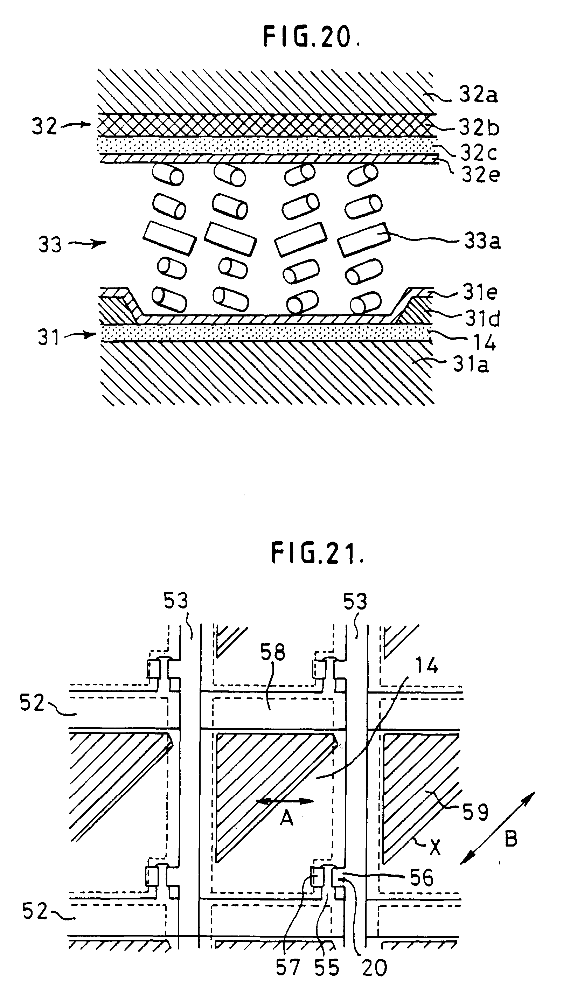

Figure **19** is a plan view showing an LCD of the tenth example. Figure **20** is a cross-sectional view along the direction A in Figure **19**. Like components are indicated by like reference numerals to those in Figures **16** and **17**. In this LCD, two liquid crystal layer regions (one is indicated by the reference numeral **59**) with different aligning directions are formed so that both regions exist in each picture element. That is, one of the two liquid crystal regions with different aligning directions is shown as a hatched region, and the other region is shown as a region without hatching. Such aligning conditions are formed on the aligning film **31e** of the active matrix substrate **31**. The two liquid crystal layer regions with different aligning directions are positioned in such a manner that the boundary therebetween is parallel to the aligning direction (the direction **B**) of the liquid crystal molecules which are in contact with the aligning film **31e** of the active matrix substrate **31**. In order to realize such aligning conditions, the same aligning treatment as in the above example can be adopted.

As described above, in this LCD, the boundary **X** between the two liquid crystal layer regions with different aligning directions is parallel to the aligning direction (the direction **B**) of the liquid crystal molecules which are in contact with the aligning film **31e** of the active matrix substrate **31**. Accordingly, the disorder of liquid crystal alignment can be suppressed, which results in the above-mentioned occurrence of the disclination line can be suppressed. In this example, the above-described aligning conditions are formed on the aligning film **31e** of the active matrix substrate **31**. Alternatively, the aligning conditions can be formed only on the aligning film **32e** of the counter substrate **32**, or on both the aligning films **31e** and **32e** of the substrates **31** and **32**. In the former case, it is necessary to set the boundary **X** to be parallel to the aligning direction of liquid crystal molecules which are in contact with the aligning film **32e** of the counter substrate **32**. In the latter case, the boundary **X** may be set so as to be parallel to the aligning direction of liquid crystal molecules which are in contact with either of the aligning film **31e** of the active matrix substrate **31** or the aligning film **32e** of the counter substrate **32**.

If the aligning direction (the direction **B**) is different from that in the above-described case, as is shown in Figure **21**, the two liquid crystal layer regions with different aligning directions may be formed so that the boundary **X** therebetween is set to be parallel to the aligning direction.

In the above cases, as is shown in Figures **19** and **21**, the boundary **X** is formed from one of the horizontally adjacent sides to the other, or from one of the vertically adjacent sides to the other sides of the display panel of the LCD. The invention is not limited to the specific patterns. The boundary **X** extending from one side does not necessarily reach the other side. Alternatively, the boundary **X** may divide each side.

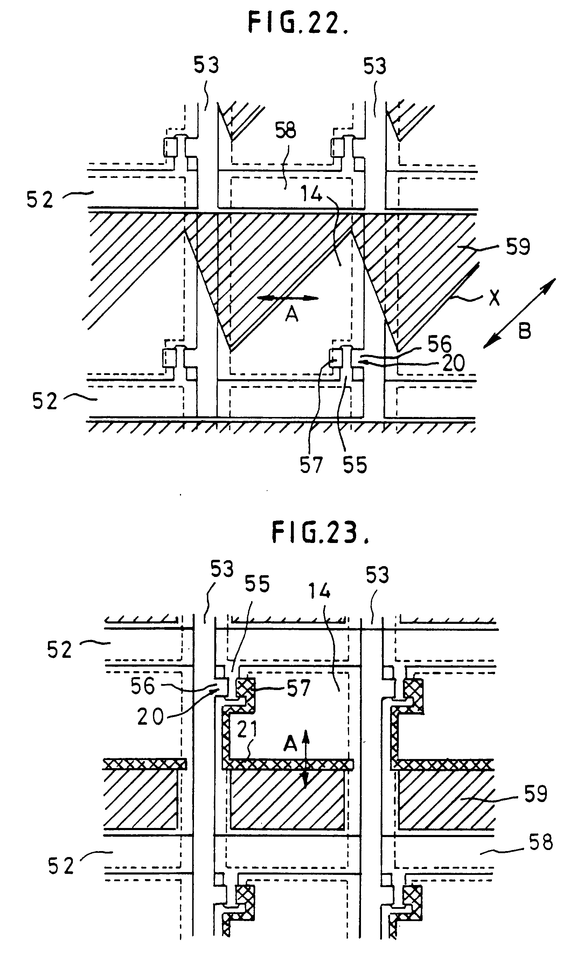

In addition, the two liquid crystal layer regions with different aligning directions are formed in each separate picture element. The invention is not limited to this specific case. Alternatively, as is shown in Figure **22**, the two liquid crystal layer regions may be formed over successive picture elements. In such a case, on a portion corresponding to the picture element, the boundary **X** between the two liquid crystal layer regions with different aligning directions should be set so as to be parallel to the aligning direction (the direction **B**). In other words, portions other than picture elements hardly affect the aligning direction of liquid crystal molecules during the display, so that the boundary **X** between the two liquid crystal layer regions with different aligning directions in the portions other than the picture elements is not necessarily parallel to the aligning direction (the direction **B**) of the liquid crystal molecules. In order to realize such aligning conditions, the same treatment as in the previous example can be adopted.

Moreover, as is shown in Figure **21**, in the case of the active matrix type LCD having the TFT **20** of a nonlinear element between the picture element and the signal line, if the boundary **X** between the two liquid crystal layer regions with different aligning directions is positioned farthest from the nonlinear element, it is possible to prevent the deterioration of the nonlinear element during the treatment for making the surface rough.

In Example 10, it is appreciated that three or more liquid crystal layer regions with different aligning directions are formed in one picture element, and the respective boundaries are set so as to be parallel to the aligning direction of liquid crystal molecules.

Example 11

In this example, two or more regions with different aligning directions are formed, and a light blocking film is formed on each boundary, so that the light leaked from the boundary portion is blocked by the light blocking film. In this case, it is unnecessary to set the boundary to be parallel to the aligning direction of the liquid crystal molecules.

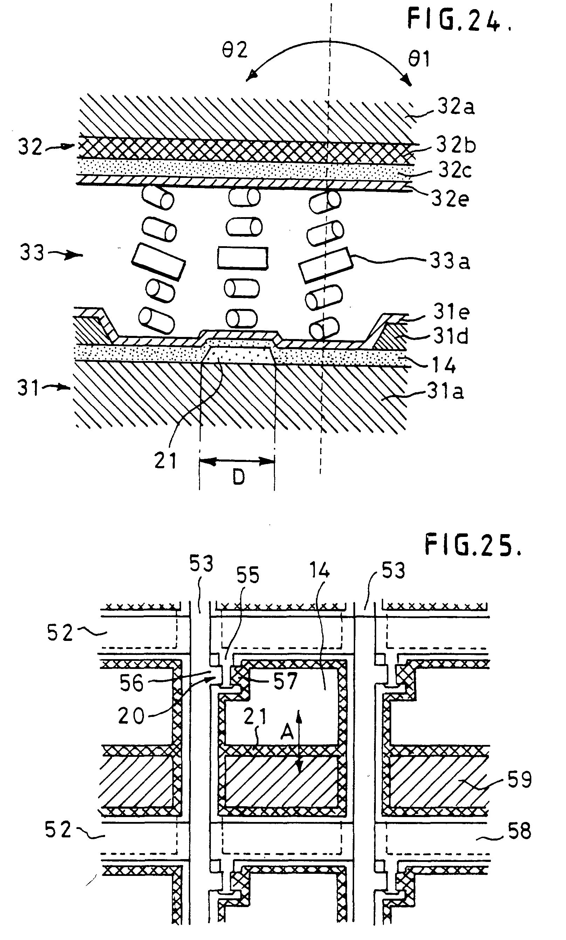

Figure **23** is a plan view showing an LCD of this example, and Figure **24** is a cross-sectional view thereof. In this LCD, the boundary between two liquid crystal layer regions with different aligning directions (one is indicated by the reference numeral **59**) is covered with a light blocking film **21** which is extended from the drain electrode **57**.

Accordingly, in this example, the light leaked from the boundary portion in which any disclination line occurs can be blocked by the light blocking film **21**, so that the contrast can be enhanced. The light blocking film is formed of the same material as that of the drain electrode **57** constituting the TFT **20** because the attaching accuracy of the two substrates is low. If the light blocking film **21** is separately formed, a positioning deviation occurs between the light blocking film **21** and the TFT **20** both of which have the light blocking function after the attachment of the substrates. As a result, the opening ratio is reduced. On the contrary, if the light blocking film **21** is formed of the same material as the drain electrode **57**, the deposition and etching for the drain electrode **57** can be used for the formation of the light blocking film **21**. Thus, the number of process steps is not increased as compared with the conventional process.

As shown in Figure **24**, the width **D** of the light blocking film **21** may be set to be a value with which the light blocking film **21** can block the light leaked from the portion in which the disclination line occurs.

In this example, the light blocking film 21 is formed of the same material as that of the drain electrode **57**. Alternatively, the light blocking film **21** may be formed of the same material as any electrode or the like having the light blocking function constituting the TFT **20**. In such a case, the same effects can be attained.

The light blocking film **21** in this example can be formed so as to cover the entire peripheral portions of the picture elements, as is shown in Figure **25**. Alternatively, the light blocking film **21** may be formed so as to cover the boundary **X** shown in Examples 9 and 10.

The techniques described in Examples 9, 10, and 11 can also be applied to Examples 1 to 8. Instead of to the LCDs of above-mentioned modes and structures, the present invention is applicable to any LCD of a desired mode and a desired structure.

As apparent from the above-described examples, according to the invention, the aligning conditions of liquid crystal molecules can be controlled so as to be different from each other in one and the same crystal cell, so that the change in refractive index generated in the thickness direction of the liquid crystal cell can be made small. Accordingly, the reverse phenomenon, the degradation of contrast, and the like in the LCD can be eliminated. According to the invention, it is unnecessary to change the electrode pattern as in the conventional improving method, so that the viewing angle characteristics can be improved by a simple production method at a low cost. Thus, the driving method for the LCD is not complicated. Therefore, it is possible to provide an LCD capable of performing a display with high contrast and high quality.

According to the invention, the viewing angle dependence of the LCD can be eliminated, and the disadvantageous phenomenon that one aligning condition is absorbed by another aligning condition can be suppressed. In addition, the occurrence of disclination line at the boundary between regions with different aligning directions can be suppressed. Moreover, in the case where the light blocking film is formed, the light leaked from the disclination line, if any, can be blocked. Therefore, according to the invention, it is possible to provide an LCD with an enhanced display quality.

Various other modifications will be apparent to and can be readily made by those skilled in the art without departing from the scope of this invention. Accordingly, it is not intended that the scope of the invention be limited to the description as set forth herein, but rather by the appended claims.

**Claims**

1. A method of producing a liquid crystal display apparatus having a pair of substrates (17, 18) and a liquid crystal layer (19) interposed therebetween and having picture elements disposed in a matrix, the method comprising the steps of:

   forming an underlying film (42a,42b) on at least one of the pair of substrates;
   making the surface of a first portion of the underlying film (42a,42b) rough;
   forming an aligning film (10), and
   performing a treatment on the aligning film for aligning the liquid crystal molecules adjacent to the aligning film;
   wherein the roughness of the first portion of the underlying film is transferred to the aligning film whereby a first portion of the aligning film has a first degree of roughness and a second portion of the aligning film has a second degree of roughness, the first and second portions of the aligning film corresponding to a display portion of the display device; wherein the angle of inclination to the substrate of the liquid crystal molecules in the liquid crystal layer in the vicinity of the aligning film but not in contact with the surface of the aligning film depends on the degree of roughness transferred to the aligning film.

2. A method of producing a liquid crystal display apparatus according to claim 1, wherein the step of making the underlying film (43) rough includes the substeps of:

   selectively forming a resist pattern (47) on a second portion of the underlying film;

   making the first portion of the surface of the underlying film rough, the resist pattern not being formed on the first portion of the underlying film; and

   removing the resist pattern (47) from the underlying film.

3. A method of producing a liquid crystal display apparatus according to claim 1, wherein the underlying film is formed to include a first portion made of a first material and a second portion made of a second material different from the first material, and the step of making the underlying film rough includes:
   a step of making the surface of the first portion and the surface of the second portion of different roughness from each other.

4. A method of producing a liquid crystal display apparatus according to claim 1, wherein the step of making the underlying film rough is performed with respect to at least one selected picture element.

5. A method of producing a liquid crystal display apparatus according to claim 1, wherein the step of making the underlying film rough is performed with respect to at least a selected one of a plurality of portions in each of the picture elements.

6. A method of producing a liquid crystal display apparatus according to claim 1, wherein the aligning film in each of the picture elements includes a plurality of portions having different degrees of roughness.

7. A method of producing a liquid crystal display apparatus according to claim 1, wherein the aligning film is made of an organic polymer.

8. A method of producing a liquid crystal display apparatus according to claim 7, wherein the organic polymer film includes a material containing polyimide, polyamide, polystyrene, polyamideimide, epoxyacrylate, spiranacrylate, or polyurethane as a main component.

9. A method of producing a liquid crystal display apparatus according to claim 1, and further including a step of selectively forming an insulating film on the underlying film, the surface of the underlying film being made rough, thereby making the surface of the insulating film rough in accordance with the roughness of the surface of the underlying film,

   wherein the aligning film is formed to cover the underlying film and the insulating film so that the roughness of the surface of the insulating film is transmitted to the surface of the aligning film in addition to the roughness of the surface of the underlying film.

10. A method of producing a liquid crystal display apparatus according to claim 9, wherein the surface of the aligning film is made rough depending on the roughness of the surface of the underlying film, the roughness of the insulating film and the presence of the insulating film.

11. A method of producing a liquid crystal display apparatus according to claim 1, wherein the degree of roughness of the first portion of the aligning film in one picture element is different from the degree of roughness of the first portion of the aligning film in another picture element.

12. A method of producing a liquid crystal display apparatus according to claim 1 wherein the surface of the first portion of the underlying film is made rough by light irradiation.

13. A method of producing a liquid crystal display apparatus according to claim 1 wherein a mask or light-converging device is used to provide the light irradiation of the first portion of the underlying film.

14. A method of producing a liquid crystal display apparatus according to claim 12 or 13 wherein the light used in the irradiation is ultraviolet light, visible light or infrared light.

**Patentansprüche**

1. Verfahren zum Herstellen einer Flüssigkristall-Anzeigevorrichtung mit einem Paar von Substraten (17, 18) und einer zwischen diese eingefügten Flüssigkristallschicht (19) und mit in einer Matrix angeordneten Bildelementen, wobei das Verfahren die folgenden Schritte aufweist:

   - Herstellen eines unteren Films (42a, 42b) auf mindestens einem der Substrate des Paars;
   - Aufrauen der Oberfläche eines ersten Abschnitts des unteren Films (42a, 42b) ;
   - Herstellen eines Ausrichtungsfilms (10) und
   - Ausführen einer Behandlung am Ausrichtungsfilm zum Ausrichten der an diesen angrenzenden Flüssigkristallmoleküle;
   - wobei die Rauigkeit des ersten Abschnitts des unteren Films an den Ausrichtungsfilm übertragen wird, wobei ein erster Abschnitt des Ausrichtungsfilm einen ersten Rauigkeitsgrad und ein zweiter Abschnitt des Ausrichtungsfilms einen zweiten Rauigkeitsgrad aufweist, wobei der erste und der zweite Abschnitt des Ausrichtungsfilms einem Anzeigeabschnitt der Anzeigevorrichtung entsprechen; wobei der Neigungswinkel der Flüssigkristallmoleküle in der Flüssigkristallschicht zum Substrat in der Nähe des Ausrichtungsfilms, jedoch nicht in Kontakt mit der Oberfläche des Ausrichtungsfilms, vom an den Ausrichtungsfilm übertragenen Rauigkeitsgrad abhängt.

2. Verfahren zum Herstellen einer Flüssigkristall-Anzeigevorrichtung nach Anspruch 1, bei dem der Schritt des Aufrauens des unteren Films (43) die folgenden Unterschritte beinhaltet:

   - selektives Herstellen eines Resistmusters (47) auf einem zweiten Abschnitt des unteren Films;
   - Aufrauen des ersten Abschnitts der Oberfläche des unteren Films, wobei auf diesem ersten Abschnitt des unteren Films das Resistmuster nicht ausgebildet ist; und
   - Entfernen des Resistmusters (47) vom unteren Film.

**3.** Verfahren zum Herstellen einer Flüssigkristall-Anzeigevorrichtung nach Anspruch 1, bei dem der untere Film so hergestellt ist, dass er einem ersten Abschnitt aus einem ersten Material und einem zweiten Abschnitt aus einem zweiten, vom ersten Material verschiedenen Material enthält, und bei dem der Schritt des Aufrauens des unteren Films Folgendes aufweist:

- einen Schritt des Versehens der Oberfläche des ersten Abschnitts und der Oberfläche des zweiten Abschnitts mit voneinander verschiedenen Rauigkeiten.

**4.** Verfahren zum Herstellen einer Flüssigkristall-Anzeigevorrichtung nach Anspruch 1, bei dem der Schritt des Aufrauens des unteren Films in Bezug auf mindestens ein ausgewähltes Bildelement ausgeführt wird.

**5.** Verfahren zum Herstellen einer Flüssigkristall-Anzeigevorrichtung nach Anspruch 1, bei dem der Schritt des Aufrauens des unteren Films in Bezug auf mindestens einen ausgewählten von mehreren Abschnitten in jedem der Bildelemente ausgeführt wird.

**6.** Verfahren zum Herstellen einer Flüssigkristall-Anzeigevorrichtung nach Anspruch 1, bei dem der Ausrichtungsfilm in jedem der Bildelemente mehrere Abschnitte mit verschiedenen Rauigkeitsgraden aufweist.

**7.** Verfahren zum Herstellen einer Flüssigkristall-Anzeigevorrichtung nach Anspruch 1, bei dem der Ausrichtungsfilm aus einem organischen Polymer hergestellt wird.

**8.** Verfahren zum Herstellen einer Flüssigkristall-Anzeigevorrichtung nach Anspruch 7, bei dem der Film aus einem organischen Polymer ein Material aufweist, das Polyimid, Polyamid, Polystyrol, Polyamidimid, Epoxyacrylat, Spiranacrylat oder Polyurethan als Hauptkomponente enthält.

**9.** Verfahren zum Herstellen einer Flüssigkristall-Anzeigevorrichtung nach Anspruch 1, ferner mit einem Schritt des selektiven Herstellens eines Isolierfilms auf dem unteren Film, wobei die Oberfläche des unteren Films rau gemacht ist, um dadurch die Oberfläche des Isolierfilms entsprechend der Rauigkeit der Oberfläche des unteren Film rau zu machen;

- wobei der Ausrichtungsfilm so hergestellt wird, dass er den unteren Film und den Isolierfilm bedeckt, so dass die Rauigkeit der Oberfläche des Isolierfilms zusätzlich zur Rauigkeit der Oberfläche des unteren Films an den Ausrichtungsfilm übertragen wird.

**10.** Verfahren zum Herstellen einer Flüssigkristall-Anzeigevorrichtung nach Anspruch 9, bei dem die Oberfläche des Ausrichtungsfilms abhängig von der Rauigkeit der Oberfläche des unteren Films, der Rauigkeit des Isolierfilms und dem Vorliegen des Isolierfilms aufgeraut wird.

**11.** Verfahren zum Herstellen einer Flüssigkristall-Anzeigevorrichtung nach Anspruch 1, bei dem der Rauigkeitsgrad des ersten Abschnitts des Ausrichtungsfilms in einem Bildelement vom Rauigkeitsgrad des ersten Abschnitts des Ausrichtungsfilms im anderen Bildelement verschieden ist.

**12.** Verfahren zum Herstellen einer Flüssigkristall-Anzeigevorrichtung nach Anspruch 1, bei dem die Oberfläche des ersten Abschnitts des unteren Films durch Lichteinstrahlung rau gemacht wird.

**13.** Verfahren zum Herstellen einer Flüssigkristall-Anzeigevorrichtung nach Anspruch 1, bei dem zum Erzeugen der Lichtbestrahlung des ersten Abschnitts des unteren Films eine Maske oder eine Lichtkonvergenzvorrichtung verwendet wird.

**14.** Verfahren zum Herstellen einer Flüssigkristall-Anzeigevorrichtung nach Anspruch 12 oder 13, bei dem das bei der Einstrahlung verwendete Licht Ultraviolettlicht, sichtbares Licht oder Infrarotlicht ist.

## Revendications

**1.** Procédé de production d'un appareil d'affichage à cristaux liquides ayant une paire de substrats (17, 18) et une couche de cristaux liquides (19) intercalée entre eux et ayant des éléments d'image disposés selon une matrice, le procédé comprenant les étapes consistant :

à former un film sous-jacent (42a, 42b) sur au moins l'un des substrats de la paire de substrats,
à rendre rugueuse la surface d'une première partie du film sous-jacent (42a, 42b),
à former un film d'alignement (10), et
à effectuer un traitement du film d'alignement pour aligner les molécules de cristaux liquides adjacentes au film d'alignement,
dans lequel la rugosité de la première partie du film sous-jacent est transférée au film d'alignement de telle sorte qu'une première partie du film d'alignement ait un premier degré de rugosité et qu'une seconde partie du film d'alignement ait un second degré de rugosité, la première et la seconde parties du film d'alignement correspondant à une partie d'affichage du dispositif d'affichage, dans lequel l'angle d'inclinaison par rapport au substrat des molécules de cristaux liquides dans la couche de cristaux liquides au voisinage du film d'alignement, mais non en contact avec la surface du film d'alignement, dépend du degré de rugosité transféré au film d'alignement.

2. Procédé de production d'un appareil d'affichage à cristaux liquides selon la revendication 1, dans lequel l'étape consistant à rendre rugueux le film sous-jacent (43) comprend les sous-étapes consistant :

à former sélectivement un motif de résist (47) sur une seconde partie du film sous-jacent,
à rendre rugueuse la première partie de la surface du film sous-jacent, le motif de résist n'étant pas formé sur la première partie du film sous-jacent, et
à éliminer le motif de résist (47) du film sous-jacent.

3. Procédé de production d'un appareil d'affichage à cristaux liquides selon la revendication 1, dans lequel le film sous-jacent est formé de manière à inclure une première partie constituée d'un premier matériau et une seconde partie constituée d'un second matériau différent du premier matériau, et l'étape consistant à rendre rugueux le film sous-jacent comprend :

une étape consistant à donner à la surface de la première partie et à la surface de la seconde partie des rugosités différentes l'une de l'autre.

4. Procédé de production d'un appareil d'affichage à cristaux liquides selon la revendication 1, dans lequel l'étape consistant à rendre rugueux le film sous-jacent est effectuée pour au moins un élément d'image sélectionné.

5. Procédé de production d'un appareil d'affichage à cristaux liquides selon la revendication 1, dans lequel l'étape consistant à rendre rugueux le film sous-jacent est effectuée pour au moins une partie choisie d'une pluralité de parties de chacun des éléments d'image.

6. Procédé de production d'un appareil d'affichage à cristaux liquides selon la revendication 1, dans lequel le film d'alignement de chacun des éléments d'image comprend une pluralité de parties ayant différents degrés de rugosité.

7. Procédé de production d'un appareil d'affichage à cristaux liquides selon la revendication 1, dans lequel le film d'alignement est constitué d'un polymère organique.

8. Procédé de production d'un appareil d'affichage à cristaux liquides selon la revendication 7, dans lequel le film de polymère organique comprend un matériau contenant un polyimide, un polyamide, un polystyrène, un polyamideimide, un époxyacrylate, un spiranacrylate ou un polyuréthanne comme composant principal.

9. Procédé de production d'un appareil d'affichage à cristaux liquides selon la revendication 1, comprenant par ailleurs une étape consistant à former sélectivement un film isolant sur le film sous-jacent, la surface du film sous-jacent étant rendue rugueuse, de manière à amener la rugosité de la surface du film isolant en accord avec la rugosité de la surface du film sous-jacent,

dans lequel le film d'alignement est formé pour recouvrir le film sous-jacent et le film isolant de telle manière que la rugosité de la surface du film isolant soit transmise à la surface du film d'alignement en plus de la rugosité de la surface du film sous-jacent.

10. Procédé de production d'un appareil d'affichage à cristaux liquides selon la revendication 9, dans lequel la surface du film d'alignement est rendue rugueuse en fonction de la rugosité de la surface du film sous-jacent, de la rugosité du film isolant et de la présence du film isolant.

11. Procédé de production d'un appareil d'affichage à cristaux liquides selon la revendication 1, dans lequel le degré de rugosité de la première partie du film d'alignement dans un seul élément d'image est différent du degré de rugosité de la première partie du film d'alignement dans un autre élément d'image.

12. Procédé de production d'un appareil d'affichage à cristaux liquides selon la revendication 1, dans lequel la surface de la première partie du film sous-jacent est rendue rugueuse par irradiation à la lumière.

13. Procédé de production d'un appareil d'affichage à cristaux liquides selon la revendication 1, dans lequel on utilise un masque ou un dispositif faisant converger la lumière pour obtenir l'irradiation par la lumière de la première partie du film sous-jacent.

14. Procédé de production d'un appareil d'affichage à cristaux liquides selon la revendication 12 ou 13, dans lequel la lumière utilisée pour l'irradiation est la lumière ultraviolette, la lumière visible ou la lu-

mière infrarouge.

FIG.1.

FIG.2.

FIG.3.

FIG.4.

FIG.5.

Pretilt angle (°)

Radiation time ( = Radiation amount )
(min.)

FIG.6.

Average
roughness

FIG.7.

FIG.8.

FIG.9.

# FIG.10.

# FIG.11.

# FIG.12.

(a)

(b)

(c)

# FIG.13.

(a)

(b)

(c)

(d)

(e)

(f)

# FIG.14.

(a)

(b)

# FIG.15.

# FIG.16.

# FIG.17.

## FIG 18

## FIG.19.

# FIG.20.

# FIG.21.

## FIG.22.

## FIG.23.

FIG.24.

FIG.25.

# FIG.26. PRIOR ART

# FIG.27. PRIOR ART

# FIG.28. PRIOR ART

## FIG.29. PRIOR ART

(a)    0   $\Delta n > 0$

137    132c    133a    110

(b)    $\Delta n = 0$   O

137    132c    133a    110

(c)    0   $\Delta n > 0$

137    132c    133a    110

# FIG.30.

(a)

(b)